# EUROPEAN PATENT SPECIFICATION

(11) **EP 3 434 630 B1**
(45) Date of publication and mention of the grant of the patent: **27.01.2021**
(21) Application number: 16895453.5
(22) Date of filing: 25.03.2016
(51) Int. Cl.: B65G 25/04, F16H 25/24, F16H 49/00, H02K 7/06, B65G 54/02, H02K 49/10, B65G 1/04

(54) **CONVEYING DEVICE AND STORAGE DEVICE**
FÖRDERVORRICHTUNG UND AUFBEWAHRUNGSVORRICHTUNG
DISPOSITIF DE TRANSPORT ET DISPOSITIF DE STOCKAGE

(43) Date of publication of application: 30.01.2019
(73) Proprietor: Azbil Corporation, Chiyoda-ku Tokyo 100-6419 (JP)
(72) Inventor: OKAWA, Yoichi, Tokyo 100-6419 (JP); BEPPU, Hisashi, Tokyo 100-6419 (JP)
(74) Representative: Lavoix
(86) International application number: PCT/JP2016/059735
(87) International publication number: WO 2017/163422

(56) References cited:
- WO-A1-2013/098834
- JP-A- H11 278 663
- JP-A- H11 278 663
- JP-A- H11 314 756
- JP-A- 2008 019 019
- JP-A- 2008 019 019
- US-A- 5 913 401

## Description

### Technical Field

The present invention relates to a transfer technique, more particularly, to a transfer apparatus and a storage apparatus.

### Background Art

In a transfer apparatus using a magnetic screw, a male screw made of a magnetic material is rotated to move a female screw such as a nut made of a magnetic material in a direction of a central axis of the male screw. A load of the male screw is normally received by fixed bearings disposed at both ends. However, if the male screw is long, the male screw may be subjected to flexure when the load of the male screw is received only by the fixed bearings disposed at both ends of the male screw. Therefore, in order to prevent or reduce the flexure of the male screw, a movable bearing configured to be movable may be provided between the fixed bearings in a manner not hindering a movement of the female screw (for example, see PTLs 1 to 3). Document PTL 4 discloses magnetic screw device comprising an internal (male) magnetic screw having the even number of magnetized bands spirally magnetized on an outer surface with contiguous magnetized bands having opposite polarities and an external (female) magnetic screw having the even number of magnetized bands spirally magnetized on the same outer surface with contiguous magnetized bands having opposite polarities.

### Citation List

### Patent Literatures

PTL 1: JP-A-58-109242
PTL2: Japanese Patent No. 2867386
PTL3: Japanese Patent No. 2923951
PTL4: US Patent No. 5 913 401

### Summary of Invention

### Technical Problem

A movable bearing of the related art may have a power mechanism provided with a motor or the like for moving the movable bearing separately from a driving device configured to rotate a male screw. The power mechanism may be connected to the movable bearing. However, the power mechanism may generate heat or dust. In contrast, the movable bearing of a transfer apparatus may be installed at a place where generation of heat and dust is preferably reduced or prevented such as a temperature-controlled furnace. In this case, if the movable bearing cannot be separated from the power mechanism, heat or dust may be generated in the periphery of the movable bearing, that is, in the temperature-controlled furnace. Depending on the limitation of the availability of an installation space, the movable bearing that cannot be decoupled from the power mechanism may not be installed. Accordingly, it is one of objects of the present invention to provide a transfer apparatus and a storage apparatus configured to allow decoupling of a movable bearing from a power source of the movable bearing.

### Solution to Problem

According to independent claim 1, there is provided a transfer apparatus including:
(a) a rod-shaped member including a magnetic material; (b) a driving device configured to rotate the rod-shaped member about a central axis of the rod-shaped member; (c) a movable portion facing part of a side surface of the rod-shaped member, the movable portion including a magnetic material and being configured to move along the central axis of the rod-shaped member when the driving device rotates the rod-shaped member;(d) a movable bearing capable of being coupled to the movable portion by a magnetic force, the movable bearing receiving a load from the rod-shaped member and movable along the central axis of the rod-shaped member in association with the movement of the movable portion; and (e) a decoupling mechanism configured to decouple the movable bearing coupled by the magnetic force from the movable portion.

In the transfer apparatus described above, the movable portion may include a magnet configured to couple the movable portion to the movable bearing. The movable bearing is provided with a magnet configured to couple the movable bearing to the movable portion.

In the transfer apparatus described above, the decoupling mechanism may hinder the movement of the movable bearing pulled by the movable portion. The decoupling mechanism may be configured to make contact with the movable bearing and hinder the movement of the movable bearing pulled by the movable portion.

The transfer apparatus described above may further include a fixed bearing configured to receive a load of the rod-shaped member at an end portion of the rod-shaped member.

### Advantageous Effects of Invention

According to the present invention, a transfer apparatus and a storage apparatus configured to allow decoupling of a movable bearing and a power source of the movable bearing may be provided.

### Brief Description of the Drawings

[Fig. 1] Fig. 1 is a schematic cross-sectional view illustrating a storage apparatus according to an embodiment of the invention.
[Fig. 2] Fig. 2 is a schematic cross-sectional view illustrating a transfer apparatus according to the embodiment of the invention.
[Fig. 3] Fig. 3 is a schematic cross-sectional view illustrating a first rod-shaped member and an opposite member according to the embodiment of the invention.
[Fig. 4] Fig. 4 is a schematic front view illustrating a movable bearing and a decoupling mechanism according to the embodiment of the invention.
[Fig. 5] Fig. 5 is conceptual drawings illustrating an action of the transfer apparatus according to the embodiment of the invention.
[Fig. 6] Fig. 6 is conceptual drawings illustrating an action of the transfer apparatus according to the embodiment of the invention.
[Fig. 7] Fig. 7 is a schematic view illustrating a first rod-shaped member and an opposite member according to a modification of the embodiment of the invention.
[Fig. 8] Fig. 8 is a schematic view illustrating the first rod-shaped member and the opposite member according to the modification of the embodiment of the invention.

### Description of Embodiments

Embodiments of the present invention will be described below. In the description of the drawings given below, the same or similar parts are denoted by the same or similar reference numerals. However, the drawings are schematically illustrated. Therefore, specific dimensions and the like should be determined with reference to the following description. It will be appreciated that the relationship or ratio between dimensions may be different among the drawings.

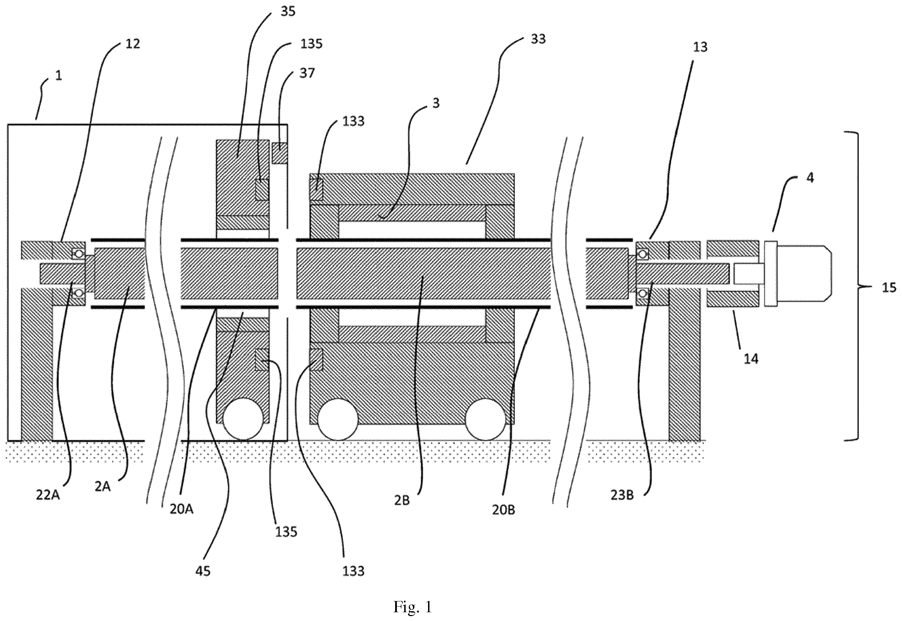

The storage apparatus according to the embodiment of the present invention includes a storage warehouse 1 that stores articles and a transfer apparatus 15 that transfers the articles, as illustrated in Fig. 1. The storage warehouse 1 is, for example, a temperature-controlled furnace having a temperature-controlled space that houses the articles. The temperature-controlled furnace is, for example, a freeze drying furnace. For example, a shelf board is disposed horizontally in the storage warehouse 1 and the articles including an object to be freeze-dried are disposed on the shelf board. The articles are, for example, vials containing a medicine poured therein.

The transfer apparatus 15 includes a first rod-shaped member 2A including a magnetic material, a second rod-shaped member 2B including a magnetic material, a driving device 4 configured to rotate the first and second rod-shaped members 2A and 2B about central axes of the first and second rod-shaped members 2A and 2B, and a movable portion 33 facing parts of side surfaces of the first and second rod-shaped members 2A and 2B and including a magnetic material, the movable portion 33 moving along the central axes of the first and second rod-shaped members 2A and 2B when the driving device 4 rotates the first and second rod-shaped members 2A and 2B.

The transfer apparatus 15 may be coupled to and decoupled from the movable portion 33 by a magnetic force and may include a movable bearing 35 capable of moving along the central axis of the first rod-shaped member 2A in association with the movement of the movable portion 33 upon reception of a radial load of the first rod-shaped member 2A for example, and a decoupling mechanism 37 configured to decouple the movable bearing 35 coupled to the movable portion 33 by the magnetic force from the movable portion 33.

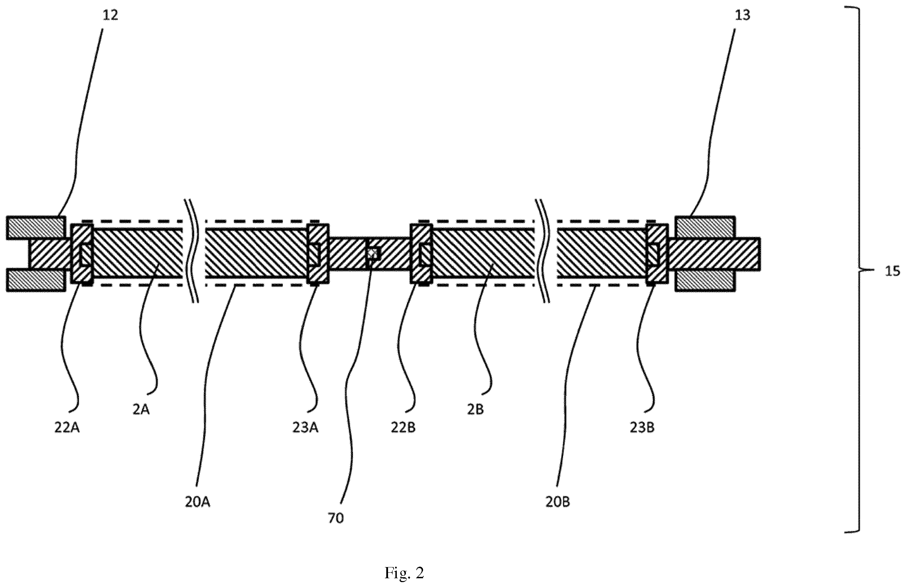

For example, the first rod-shaped member 2A is disposed in an interior of the storage warehouse 1. The second rod-shaped member 2B is disposed in a space outside the storage warehouse 1. As illustrated in Fig. 2, an outer diameter of the first rod-shaped member 2A is identical to an outer diameter of the second rod-shaped member 2B. The first rod-shaped member 2A and the second rod-shaped member 2B are disposed so that a central axis of the first rod-shaped member 2A and a central axis of the second rod-shaped member 2B are aligned on an identical line.

The first rod-shaped member 2A is covered with a first cover 20A. A first end portion of the first rod-shaped member 2A is inserted into a first terminal member 22A. A second end portion of the first rod-shaped member 2A is inserted into a second terminal member 23A.

The second rod-shaped member 2B is covered with a second cover 20B. A first end portion of the second rod-shaped member 2B is inserted into a third terminal member 22B. A second end portion of the second rod-shaped member 2B is inserted into a fourth terminal member 23B.

The second terminal member 23A and the third terminal member 22B are connected via a connection member 70. When a door of the storage warehouse 1 illustrated in Fig. 1 is closed, the second terminal member 23A and the third terminal member 22B may be decoupled.

As illustrated in Fig. 1, a driving device 4 is coupled to the second rod-shaped member 2B via a mandrel portion of the fourth terminal member 23B. The driving device 4 and the fourth terminal member 23B may be coupled via a coupling device (coupling) 14, for example. The driving device 4 includes, for example, a rotating motor, and is disposed outside a temperature-controlled space in the storage warehouse 1. The driving device 4 may be covered with a shield or the like which prevents diffusion of possible dust or the like.

When the driving device 4 causes the fourth terminal member 23B to rotate about the central axes of the first and second rod-shaped members 2A and 2B as an axis of rotation, the second rod-shaped member 2B, the third terminal member 22B, the second terminal member 23A, the first rod-shaped member 2A, and the first terminal member 22A illustrated in Fig. 2 rotate simultaneously.

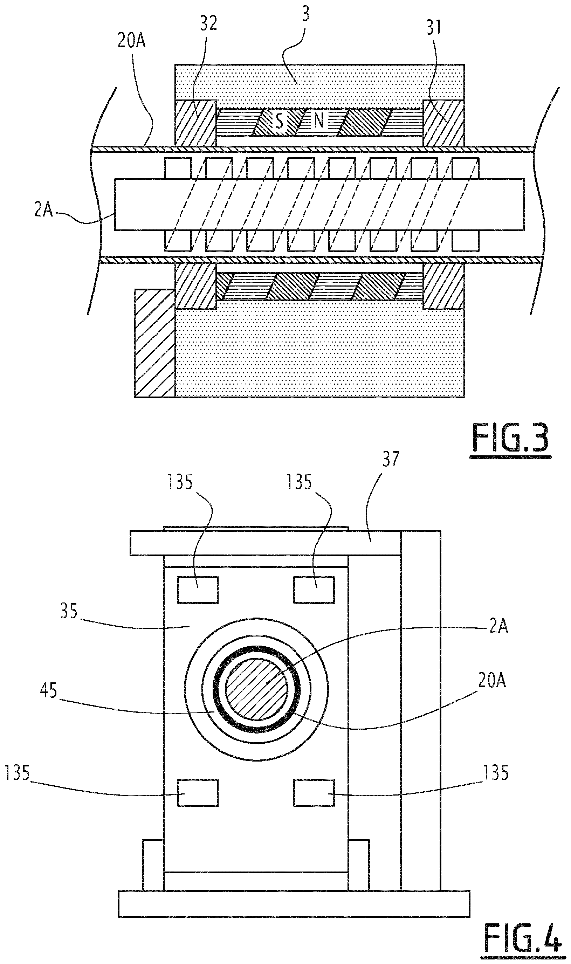

As illustrated in Fig. 3, the first rod-shaped member 2A is a magnetic screw including a magnetic material and an outer peripheral surface thereof is threaded in a spiral shape. The first cover 20A is, for example, a thin-walled pipe of a nonmagnetic material made of stainless steel, aluminum, resin, or the like. The first rod-shaped member 2A is inserted into the first cover 20A having a cylindrical shape. The central axis of the first rod-shaped member 2A is aligned with the central axis of the first cover 20A. When the first rod-shaped member 2A rotates, the first cover 20A also rotates about the central axis of the first rod-shaped member 2A.

As illustrated in Fig. 1, the second rod-shaped member 2B is also a magnetic screw including a magnetic material and the outer peripheral surface thereof is threaded in a spiral shape. The second cover 20B is, for example, a thin-walled pipe of a nonmagnetic material made of stainless steel, aluminum, resin, or the like. The second rod-shaped member 2B is inserted into the second cover 20B having a cylindrical shape. The central axis of the second rod-shaped member 2B is aligned with the central axis of the second cover 20B. When the second rod-shaped member 2B rotates, the second cover 20B also rotates about the central axis of the second rod-shaped member 2B.

The transfer apparatus 15 further includes a first fixed bearing 12 configured to receive a load from the first rod-shaped member 2A via a mandrel portion of the first terminal member 22A, and a second fixed bearing 13 configured to receive a load from the second rod-shaped member 2B via the mandrel portion of the fourth terminal member 23B as illustrated in Fig. 1 and Fig. 2. The first fixed bearing 12 is disposed, for example, in the storage warehouse 1. The second fixed bearing 13 is disposed, for example, outside the storage warehouse 1.

The movable portion 33 further includes an opposite member 3 that faces part of the side surfaces of the first and second rod-shaped members 2A and 2B and including a magnetic material as illustrated in Fig. 1. The opposite member 3 is a magnetic nut including a magnetic material and provided with a hole having an inner circumference larger than outer circumferences of the first and second rod-shaped members 2A and 2B. The first and second rod-shaped members 2A and 2B penetrate through a hole in the opposite member 3 having a nut shape.

As illustrated in Fig. 3, S pole magnetized zones and N pole magnetized zones are alternately provided in a spiral shape on an inner peripheral surface of the hole in the opposite member 3. A pitch of the magnetized zones of the opposite member 3 is substantially the same as a pitch of the threads of the first and second rod-shaped members 2A and 2B. Guide rings 31 and 32 such as bushes may be provided on an inner peripheral surface of the opposite member 3. The inner circumferences of the respective guide rings 31 and 32 are smaller than the inner circumference of the opposite member 3 and make contact with the outer peripheral surfaces of the first and second covers 20A and 20B. Therefore, a constant interval is kept between the threads of the first and second rod-shaped members 2A and 2B and the magnetized zones of the opposite member 3. The guide rings 31 and 32 are made of a material having a small friction coefficient, such as fluororesin.

A magnetic force acts between the threads of the first and second rod-shaped members 2A and 2B illustrated in Fig. 1 and the magnetized zone of the opposite member 3. The opposite member 3 is fixed to the movable portion 33 in a non-rotatable manner. Therefore, when the driving device 4 rotates the first and second rod-shaped members 2A and 2B, the movable portion 33 provided with the opposite member 3 moves linearly along the central axes of the first and second rod-shaped members 2A and 2B. A direction of travel of the movable portion 33 is switched depending on the direction of rotation of the first and second rod-shaped members 2A and 2B. Therefore, the movable portion 33 may reciprocate along the central axes of the first and second rod-shaped members 2A and 2B. The movable portion 33 may be provided with wheels or the like configured to rotate in contact with a floor or a rail on the floor. The movable portion 33 may also be supported by, for example, a guide rail. The movable portion 33 is provided, for example, with a table for placing articles.

Note that the first rod-shaped member 2A and the second rod-shaped member 2B are connected in such a manner that a screw pitch of an extended screw shaft matches the screw pitch of the second rod-shaped member 2B and does not cause any misalignment even when the screw shaft of the first rod-shaped member 2A is extended. Accordingly, the opposite member 3 is allowed to move smoothly from the first rod-shaped member 2A to the second rod-shaped member 2B, or from the second rod-shaped member 2B to the first rod-shaped member 2A at a connecting portion between the first rod-shaped member 2A and the second rod-shaped member 2B.

The movable bearing 35 is movable, for example, in the interior of the storage warehouse 1. As illustrated in Fig. 4, the movable bearing 35 is provided with a through-hole 45 configured to allow the first rod-shaped member 2A and the first cover 20A to pass through. An inner wall of the through-hole 45 provided in the movable bearing 35 is not provided with a magnetic material. Therefore, even when the first rod-shaped member 2A illustrated in Fig. 1 rotates, the movable bearing 35 does not move solely. The movable bearing 35 moves by being pushed by the movable portion 33 or by being pulled by the movable portion 33 coupled by a magnetic force. The movable bearing 35 may be provided with wheels or the like configured to rotate in contact with a floor or a rail on the floor.

A magnet 135 is provided on a surface of the movable bearing 35 facing the movable portion 33. A magnet 133 is provided on a surface of the movable portion 33 facing the movable bearing 35. A configuration in which the magnet 135 may be provided on the movable bearing 35 and a member including iron to be coupled to the magnet 135 is provided on the surface of the movable portion 33 facing the movable bearing 35 is also applicable. Alternatively, a configuration in which the magnet 133 may be provided on the movable portion 33 and a member including iron to be coupled to the magnet 133 is provided on the surface of the movable bearing 35 facing the movable portion 33 is also applicable.

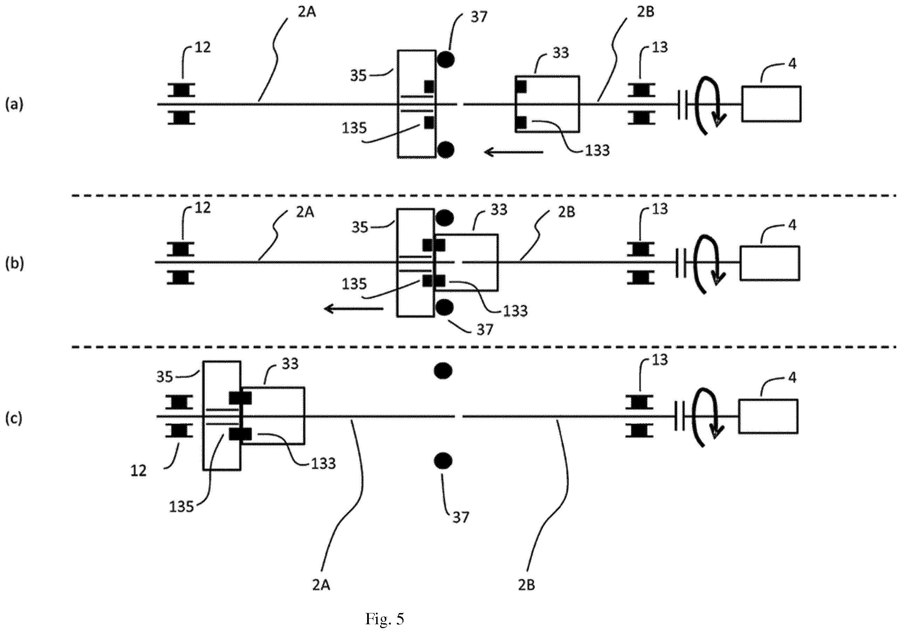

As illustrated in Fig. 5(a), when the movable portion 33 approaches the movable bearing 35 by the driving device 4 rotating the first and second rod-shaped members 2A and 2B, the magnet 133 of the movable portion 33 and the magnet 135 of the movable bearing 35 are coupled as illustrated in Fig. 5(b). The movable bearing 35 coupled to the movable portion 33 by a magnetic force is pushed by the movable portion 33 and moves along the first rod-shaped member 2A as illustrated in Fig. 5(c).

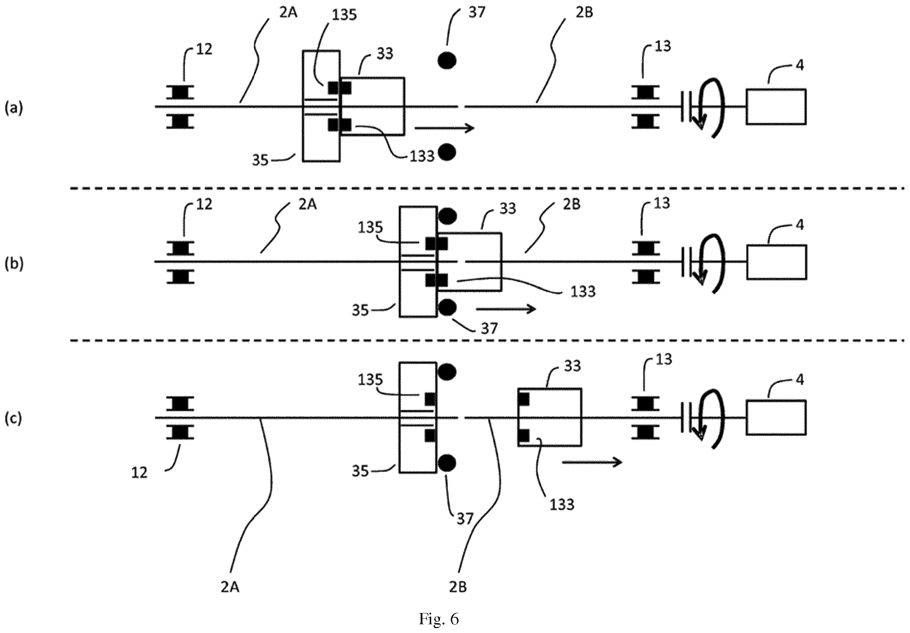

When the driving device 4 rotates the first and second rod-shaped members 2A and 2B in a direction of rotation opposite to the direction of rotation illustrated in Fig. 5, the movable bearing 35 is pulled by the movable portion 33 by a magnetic force and moves along the first rod-shaped member 2A as illustrated in Fig. 6(a). As illustrated in Fig. 4, when the movable bearing 35 makes contact with the decoupling mechanism 37 being, for example, a hook shaped column, a movement of the movable bearing 35 in a direction in which the movable bearing 35 is pulled by the movable portion 33 is stopped by the decoupling mechanism 37 as illustrated in Fig. 6(b) and Fig. 6(c). In addition, the movable bearing 35 coupled by a magnetic force is decoupled from the movable portion 33. Accordingly, the movable bearing 35 pulled by the movable portion 33 is prevented from coming out from the storage warehouse.

In the storage apparatus according to the embodiment described above, the driving torque is transmitted between the first and second rod-shaped members 2A and 2B and the opposite member 3 illustrated in Fig. 1 in a non-contact manner by a magnetic force. Therefore, when a driving torque is transmitted between the first and second rod-shaped members 2A and 2B and the opposite member 3, heat and dust are unlikely to be generated. Accordingly, even if the opposite member 3 moves in the temperature-controlled space in the storage warehouse 1, an influence of heat generation in the temperature-controlled space may be prevented or reduced and the temperature-controlled space may be kept clean.

In addition, since the driving device 4 is disposed outside the temperature-controlled space in the storage warehouse 1, even if dust is generated in the driving device 4, the dust is unlikely to enter the temperature-controlled space in the storage warehouse 1. If the driving devices are disposed in the interior of the temperature-controlled furnace, the temperature distribution may become uneven in the temperature-controlled furnace such as a freeze drying furnace due to the heated driving devices. In this case, the quality of multiple articles disposed in the temperature-controlled furnace may become uneven. In contrast, in the storage apparatus according to the embodiment, since the driving device 4 is disposed outside the temperature-controlled space in the storage warehouse 1, the temperature is unlikely to become uneven in the storage warehouse 1.

In addition, since the movement of the movable bearing 35 is performed via the movable portion 33, the movable bearing 35 is separated from the driving device 4, which is a power source. Therefore, even though the driving device 4 is disposed outside the storage warehouse 1, the movable bearing 35 may be moved in the interior of the storage warehouse 1. In addition, since the movement of the movable bearing 35 is performed via the movable portion 33, a door of the storage warehouse 1 may be opened and closed by separating the connecting portion between the first rod-shaped member 2A and the second rod-shaped member 2B located near the door.

Furthermore, from the view point of maintaining the temperature in the storage warehouse 1 or preventing or reducing introduction of dust outside the storage warehouse 1 into the interior, the movable bearing 35 may preferably stay in the storage warehouse 1. Limiting of movable range of the movable bearing 35, not only in the storage warehouse 1, may be preferred depending on the case. In contrast, according to the storage apparatus of the embodiment, the movable range of the movable bearing 35 may be set within a range smaller than the movable range of the movable portion 33 by the decoupling mechanism 37.

### (Modification)

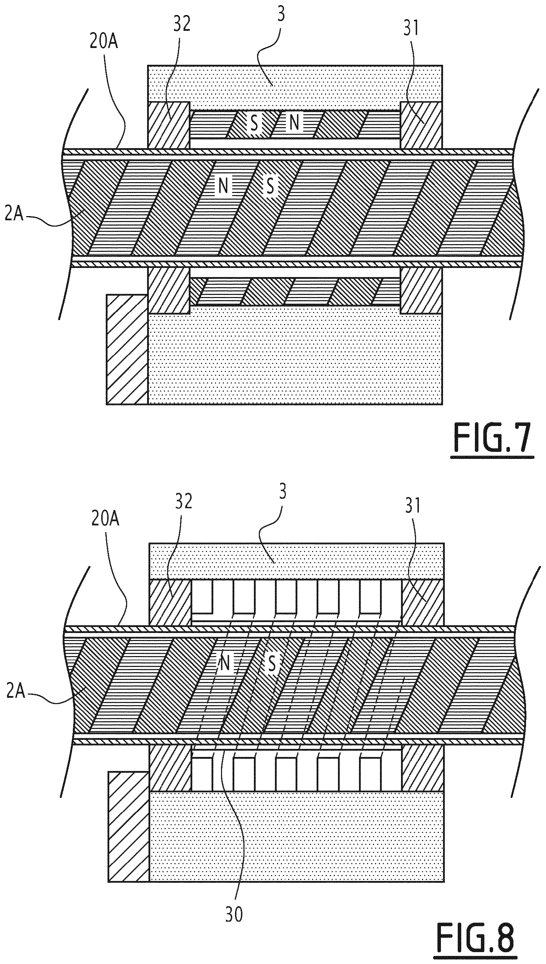

Fig. 3 illustrates the first rod-shaped member 2A provided with the threads. In contrast, as illustrated in Fig. 7, the outer peripheral surface of the first rod-shaped member 2A may be provided with S pole magnetized zones and N pole magnetized zones alternately in a spiral shape. The same applies to the second rod-shaped member 2B. The pitch of the magnetized zones of the first rod-shaped member 2A illustrated in Fig. 7 is substantially identical to the pitch of the magnetized zones of the opposite member 3. When the first rod-shaped member 2A is rotated, a magnetic force acts between the magnetized zones of the first rod-shaped member 2A and the magnetized zones of the opposite member 3, and thus the opposite member 3 moves.

Alternatively, as illustrated in Fig. 8, the opposite member 3 may be a threaded magnetic material. The surface of a threaded hole in the opposite member 3 may be covered with a thin-walled pipe 30 formed of a nonmagnetic material. This can prevent foreign matters from adhering to a threaded groove of the opposite member 3. The structure of the first rod-shaped member 2A is the same as that of Fig. 7. The pitch of the threads of the opposite member 3 illustrated in Fig. 8 is substantially the same as the pitch of the magnetized zones of the first rod-shaped member 2A. When the first rod-shaped member 2A is rotated, a magnetic force acts between the magnetized zones of the first rod-shaped member 2A and the threads of the opposite member 3, and the opposite member 3 move.

### (Other Embodiments)

As described above, the invention has been described by way of the embodiment, but it should not be understood that the description and the drawings that are parts of the disclosure limit the invention. It must be apparent to those skilled in the art that various alternative embodiments, examples, and operational techniques are clarified based on the disclosure. For example, the shape of the opposite member is not limited to the nut shape, but may be, for example, a concave shape. In this case, the rod-shaped member passes through the concave portion of the concave opposite member. S pole magnetized zones and N pole magnetized zones are alternately provided on the side surface of the concave portion of the concave opposite member. In addition, the storage warehouse may be a sterilization processing furnace or a fermenting furnace or may be a storage warehouse that does not undergo temperature control. In addition, the articles transferred to the inside and the outside of the storage warehouse are not limited to medicines, but may include foods, beverages, precision parts, etc., as well as any articles. In addition, the transfer apparatus is not necessarily combined with the storage warehouse. As described above, it should be understood that the invention encompasses various embodiments and the like not described in the specification.

### Reference Signs List

1: storage warehouse
2A: first rod-shaped member
2B: second rod-shaped member
3: opposite member
4: driving device
12: first fixed bearing
13: second fixed bearing
15: transfer apparatus
20A: first cover
20B: second cover
22A: first terminal member
22B: third terminal member
23A: second terminal member
23B: fourth terminal member
30: thin-walled pipe
31: guide ring
33: movable portion
35: movable bearing
37: decoupling mechanism
45: through-hole
70: connection member
133, 135: magnet

## Claims

1. A transfer apparatus (15) comprising:
a rod-shaped member (2A, 2B) including a magnetic material; a driving device (4) configured to rotate the rod-shaped member (2A, 2B) about a central axis of the rod-shaped member (2A, 2B); a movable portion facing part of a side surface of the rod-shaped member, the movable portion (33) including a magnetic material and being configured to move along the central axis of the rod-shaped member (2A, 2B) when the driving device (4) rotates the rod-shaped member (2A, 2B); a movable bearing (35) capable of being coupled to the movable portion (33) by a magnetic force, the movable bearing (35) receiving a load from the rod-shaped member (2A, 2B) and being movable along the central axis of the rod-shaped member (2A, 2B) in association with a movement of the movable portion (33); and a decoupling mechanism (37) configured to decouple the movable bearing (35) coupled by the magnetic force from the movable portion (33).

2. The transfer apparatus according to claim 1, wherein the movable portion (33) includes a magnet (133, 135) configured to couple the movable portion to the movable bearing (35).

3. The transfer apparatus according to claim 1 or 2, wherein the movable bearing (35) includes a magnet (133, 135) configured to couple the movable bearing (35) to the movable portion (33).

4. The transfer apparatus according to any one of claims 1 to 3, wherein the decoupling mechanism (37) hinders the movement of the movable bearing (35) pulled by the movable portion (33).

5. The transfer apparatus according to any one of claims 1 to 3, wherein the decoupling mechanism (37) makes contact with the movable bearing (35) and hinders the movement of the movable bearing (35) pulled by the movable portion (33).

6. The transfer apparatus according to any one of claims 1 to 5, further comprising a fixed bearing configured to receive a load of the rod-shaped member (2A, 2B) at an end portion of the rod-shaped member (2A, 2B).

## Patentansprüche

1. Übertragungsvorrichtung (15), umfassend:
ein stabförmiges Element (2A, 2B), das ein magnetisches Material beinhaltet; eine Antriebsvorrichtung (4), die konfiguriert ist, um das stabförmige Element (2A, 2B) um eine Mittelachse des stabförmigen Elements (2A, 2B) zu drehen; einen beweglichen Abschnitt, der einem Teil einer Seitenfläche des stabförmigen Elements zugewandt ist, wobei der bewegliche Abschnitt (33) ein magnetisches Material beinhaltet und konfiguriert ist, um sich entlang der Mittelachse des stabförmigen Elements (2A, 2B) zu bewegen, wenn die Antriebsvorrichtung (4) das stabförmige Element (2A, 2B) dreht; ein bewegliches Lager (35), das durch eine Magnetkraft mit dem beweglichen Abschnitt (33) gekoppelt werden kann, wobei das bewegliche Lager (35) eine Last von dem stabförmigen Element (2A, 2B) aufnimmt und in Verbindung mit einer Bewegung des beweglichen Abschnitts (33) entlang der Mittelachse des stabförmigen Elements (2A, 2B) beweglich ist; und einen Entkopplungsmechanismus (37), der konfiguriert ist, um das durch die Magnetkraft gekoppelte bewegliche Lager (35) von dem beweglichen Abschnitt (33) zu entkoppeln.

2. Übertragungsvorrichtung nach Anspruch 1, wobei der bewegliche Abschnitt (33) einen Magneten (133, 135) beinhaltet, der konfiguriert ist, um den beweglichen Abschnitt mit dem beweglichen Lager (35) zu koppeln.

3. Übertragungsvorrichtung nach Anspruch 1 oder 2, wobei das bewegliche Lager (35) einen Magneten (133, 135) beinhaltet, der konfiguriert ist, um das bewegliche Lager (35) mit dem beweglichen Abschnitt (33) zu koppeln.

4. Übertragungsvorrichtung nach einem der Ansprüche 1 bis 3, wobei der Entkopplungsmechanismus (37) die Bewegung des beweglichen Lagers (35), das von dem beweglichen Abschnitt (33) gezogen wird, behindert.

5. Übertragungsvorrichtung nach einem der Ansprüche 1 bis 3, wobei der Entkopplungsmechanismus (37) einen Kontakt mit dem beweglichen Lager (35) herstellt und die Bewegung des beweglichen Lagers (35), das von dem beweglichen Abschnitt (33) gezogen wird, behindert.

6. Übertragungsvorrichtung nach einem der Ansprüche 1 bis 5, ferner umfassend ein feststehendes Lager, das konfiguriert ist, um eine Last des stabförmigen Elements (2A, 2B) an einem Endabschnitt des stabförmigen Elements (2A, 2B) aufzunehmen.

## Revendications

1. Un appareil de transfert (15) comprenant :
Un élément en forme de tige (2A, 2B) incluant un matériau magnétique ; un dispositif d'entraînement (4) configuré pour faire tourner l'élément en forme de tige (2A, 2B) sur un axe central de l'élément en forme de tige (2A, 2B) ; une partie mobile face à une partie de surface latérale de l'élément en forme de tige, la partie mobile (33) incluant un matériau magnétique et étant configurée pour se déplacer le long de l'axe central de l'élément en forme de tige (2A, 2B) lorsque le dispositif d'entraînement (4) fait tourner l'élément en forme de tige (2A, 2B) ; un palier mobile (35) pouvant être couplé à la partie mobile (33) par une force magnétique, la partie mobile (35) recevant une charge provenant de l'élément en forme de tige (2A, 2B) et étant mobile le long de l'axe central de l'élément en forme de tige (2A, 2B) en association avec un mouvement de la partie mobile (33) ; et un mécanisme de découplage (37) configuré pour découpler le palier mobile (35) couplé par la force magnétique provenant de la partie mobile (33).

2. L'appareil de transfert selon la revendication 1, où la partie mobile (33) inclut un aimant (133, 135) configuré pour coupler la partie mobile au palier mobile (35).

3. L'appareil de transfert selon la revendication 1 ou 2, où le palier mobile (35) inclut un aimant (133, 135) configuré pour coupler le palier mobile (35) à la partie mobile (33).

4. L'appareil de transfert selon l'une quelconque des revendications 1 à 3, où le mécanisme de découplage (37) entrave le mouvement du palier mobile (35) tiré par la partie mobile (33).

5. L'appareil de transfert selon l'une quelconque des revendications 1 à 3, où le mécanisme de découplage (37) entre en contact avec le palier mobile (35) et entrave le mouvement du palier mobile (35) tiré par la partie mobile (33).

6. L'appareil de transfert selon l'une quelconque des revendications 1 à 5, comprenant également un palier fixe configuré pour recevoir une charge de l'élément en forme de tige (2A, 2B) sur l'extrémité de l'élément en forme de tige (2A, 2B).
